# EUROPEAN PATENT APPLICATION

(11) **EP 2 317 184 A1**
(43) Date of publication of application: **04.05.2011**
(21) Application number: 09809695.1
(22) Date of filing: 02.07.2009
(51) Int. Cl.: F16H 61/00

(54) **AUTOMATIC TRANSMISSION OIL PRESSURE CONTROL VALVE AND ASSEMBLY METHOD THEREFOR**

(30) Priority: 29.08.2008 JP 2008221115
(71) Applicant: JATCO Ltd, Fuji-shi Shizuoka 417-8585 (JP)
(72) Inventor: TOGAWA, Osamu, Shizuoka 417-8585 (JP); TAMAI, Kohshi, Shizuoka 417-8585 (JP)
(74) Representative: Grünecker, Kinkeldey, Stockmair & Schwanhäusser Anwaltssozietät
(86) International application number: PCT/JP2009/062089
(87) International publication number: WO 2010/024040

(57) **Abstract**

A hydraulic control valve of an automatic transmission includes a valve body, a valve bore formed in the valve body, a spool, a spring and a plug arranged in the valve bore, a retainer member located in one end side of the valve bore so as to prevent the spool, the spring and the plug from falling out of the valve bore while holding the spring in a compressed state, a retainer hole formed in the valve body for insertion of the retainer member therethough in a direction perpendicular to an axis of the valve, and a retainer groove formed in the valve bore in communication with the retainer hole so as to hold therein the retainer member under a force of the spring. The retainer member has an opening that allows insertion of the retainer member from the retainer hole to an insertion completion position in the retainer groove in a condition that the plug is pushed in the valve bore to a position inward of the retainer groove.

## Description

### Technical Field

The present invention relates to a hydraulic control valve of an automatic transmission and an assembly method therefor.

### Background of the Invention

There is known a hydraulic control valve of an automatic transmission, having a valve body formed with a valve bore in which a spool, a spring and a plug are arranged and retained on one end side thereof by a retainer member so as not to fall out of the valve bore (see Patent Document 1). This hydraulic control valve can be assembled by the following procedure. The spool is inserted in the valve bore. The plug is placed in the valve bore, and then, pushed by a finger until the plug reaches a position inward of a retainer hole of the valve body and brings the spring into a compressed state. The retainer member is inserted into the retainer hole from the top of the valve body. The finger is removed upon contact of the retainer member with the finger. The retainer member is pushed down to the bottom of the retainer hole. When the plug is returned to its fixed position under the restoring force of the spring, the retainer member is pressed against a wall surface of the retainer hole.

### Prior Art Documents

### Patent Documents

Patent Document 1: Japanese Laid-Open Patent Publication No. 11-182677

The above conventional hydraulic control valve has a problem that the restoring force of the spring acts on the retainer member through the plug in such a manner as to incline the retainer member relative to the retainer hole and thereby cause deterioration in the operability of pushing the retainer member down to the bottom of the retainer hole after removing the finger. Further, the plug can be pushed by the finger when the setting position of the retainer member is located near the opening end of the valve bore. The plug cannot be, however, pushed by the finger and needs to be pushed with the use of a press jig when the setting position of the retainer member is located inside far from the opening end of the valve bore. In this case, it is necessary to push a bottom side of the plug by a front end of the press jig, remove the press jig upon contact of the retainer member with the front end of the press jig, and then, push the retainer member down to the bottom of the retainer hole. There thus arises a problem that the hydraulic control valve is likely to cause a so-called plug stuck state in which the plug gets inclined with one side thereof being pushed by the press jig and gets stuck against the inner surface of the valve bore in such an inclined position.

### Summary of the Invention

The present invention has been made in order to solve the above-mentioned problems. It is an object of the present invention to provide a hydraulic control valve of an automatic transmission, which is capable of improving the assembling operability of a retainer member while preventing the occurrence of a plug stuck state, and to provide a method for assembling the hydraulic control valve of the automatic transmission.

Namely, there is provided according to one aspect of the present invention a hydraulic control valve of an automatic transmission, comprising: a valve body; a valve bore formed in the valve body; a spool, a spring and a plug arranged in the valve bore; a retainer member located in one end side of the valve bore so as to prevent the spool, the spring and the plug from falling out of the valve bore while holding the spring in a compressed state; a retainer hole formed in the valve body for insertion of the retainer member therethough in a direction perpendicular to an axis of the valve; and a retainer groove formed in the valve bore in communication with the retainer hole so as to hold therein the retainer member under a force of the spring, the retainer member having an opening that allows insertion of the retainer member from the retainer hole to an insertion completion position in the retainer groove in a condition that the plug is pushed in the valve bore to a position inward of the retainer groove.

There is provided according to another aspect of the present invention a hydraulic control valve assembly method for assembling a hydraulic control valve of an automatic transmission, the hydraulic control valve having: a valve body; a valve bore formed in the valve body; a spool, a spring and a plug arranged in the valve bore; a retainer member located in one end side of the valve bore so as to prevent the spool, the spring and the plug from falling out of the valve bore while holding the spring in a compressed state; a retainer hole formed in the valve body for insertion of the retainer member therethrough in a direction perpendicular to an axis of the valve; and a retainer groove formed in the valve bore in communication with the retainer hole so as to hold therein the retainer member under a force of the spring, the hydraulic control valve assembly method comprising: a valve part insertion step of inserting the spring, the spool and the plug into the valve bore from an opening end of the valve bore; a plug pushing step of pushing the plug by uniform pressing to a position inward of the retainer groove; a retainer insertion step of inserting the retainer member from through the retainer hole to an insertion completion position in the retainer groove while pushing the plug by uniform pressing to the position inward of the retainer groove; and a pushing force releasing step of, after completion of the retainer insertion step, releasing the plug from being pushed.

### Brief Description of the Drawings

FIG. 1 is a section view of a hydraulic control valve of an automatic transmission according to a first embodiment of the present invention.
FIG. 2A is a front view of a retainer plate (retainer member) of the hydraulic control valve according to the first embodiment of the present invention.
FIG. 2B is a side view of the retainer plate (retainer member) of the hydraulic control valve according to the first embodiment of the present invention.
FIG. 3 is a side view showing a valve part insertion step of a conventional hydraulic control valve assembly method.
FIG. 4 is a side view showing a retainer insertion step of the conventional hydraulic control valve assembly method.
FIG. 5 is a plan view seen in the direction of arrow A of FIG. 4.
FIG. 6 is a schematic view of a plug stuck state of a hydraulic control valve caused in the conventional hydraulic control valve assembly method.
FIG. 7 is an exploded side view showing a valve part insertion step of a hydraulic control valve assembly method according to the first embodiment of the present invention.
FIG. 8 is a side view showing a plug pushing step of the hydraulic control valve assembly method according to the first embodiment of the present invention.
FIG. 9A is a side view showing a retainer insertion step of the hydraulic control valve assembly method according to the first embodiment of the present invention.
FIG. 9B is a section view taken along line B-B of FIG. 9A.
FIG. 10 is a side view showing a pushing force releasing step of the hydraulic control valve assembly method according to the first embodiment of the present invention.
FIG. 11A is a schematic view showing a state where the insertion of the retainer plate is being blocked during the retainer insertion step of the hydraulic control valve assembly method according to the first embodiment of the present invention.
FIG. 11B is a schematic view showing a movement of a press jig in the state where the insertion of the retainer plate is being blocked during the retainer insertion step of the hydraulic control valve assembly method according to the first embodiment of the present invention.
FIG. 12 is a schematic view of a hydraulic control valve of an automatic transmission according to a second embodiment of the present invention.

### Detailed Description

Hereinafter, a hydraulic control valve and an assembly method therefor according to one exemplary embodiment of the present invention will be described in detail below with reference to the drawings. The present embodiment specifically refers to, as one example of hydraulic control valve, a shift valve arranged in a control valve unit of an automatic transmission (as a valve for switching a hydraulic line during a shift operation of the automatic transmission).

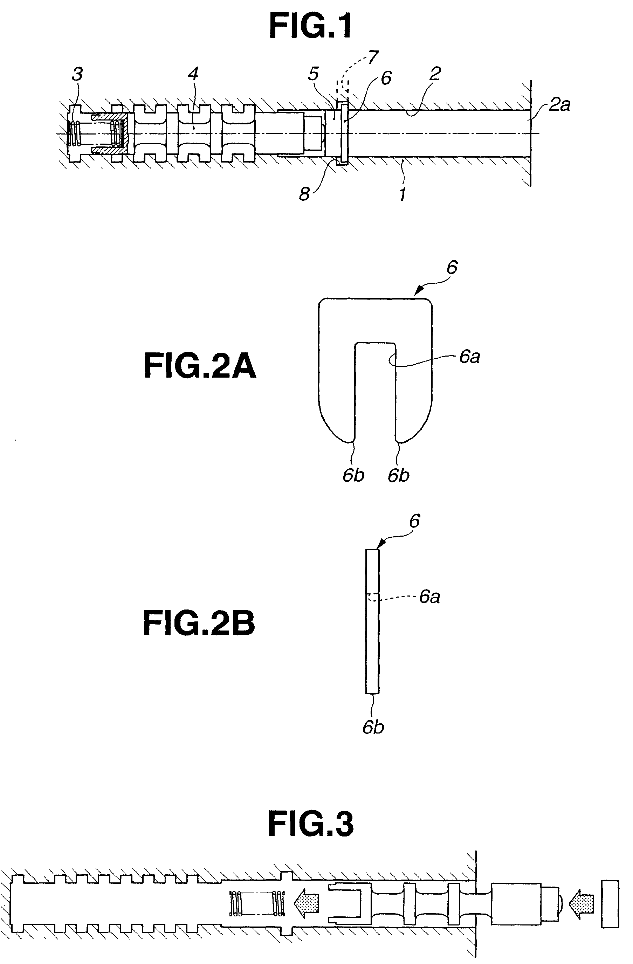

As shown in FIG. 1, the hydraulic control valve of the present embodiment includes a valve body 1, a valve bore 2, a spring 3, a spool 4, a plug 5, a retainer plate 6 (as a retainer member), a retainer hole 7 and a retainer groove 8.

The valve bore 2 (which is equivalent to the inside diameter of a cylinder) is formed in a side surface of the valve body 1 so that the spring 3, the spool 4 and the plug 5 are arranged in the valve bore 2. Further, the valve bore 2 has a plurality of hydraulic passages formed therein so as to be connected or disconnected depending on a stroke position of the spool 4.

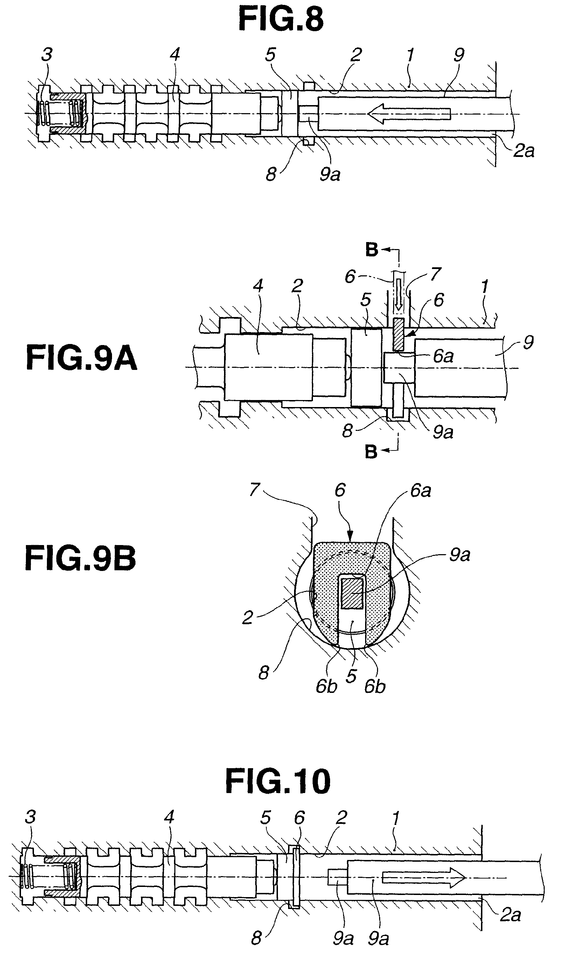

The plug 5 is provided as a seal member to prevent the leakage of hydraulic oil from an opening end 2a of the valve bore 2 and is inserted from the opening end 2a of the valve bore 2 and pushed into the valve bore 2 so as to bring the spring 3 into a compressed state. As shown in FIG. 8, the plug 5 is pushed by uniform pressing with the use of a press jig 9. The press jig 9 has a center pressing end 9a (uniform pressing end) that presses a center area of a plug surface of the plug 5 as shown in FIG. 9B.

The retainer hole 7 is formed in the valve body 1 in a direction perpendicular to an axis of the valve (i.e. perpendicular to an axial direction of the valve bore 2). The retainer groove 8 is formed in the valve bore 2 as an annular groove in communication with the retainer hole 7.

The retainer plate 6 is inserted from through the retainer hole 7 into the retainer groove 8 and located on one end side (right end side in FIG. 1) of the valve bore as a stopper member to prevent the spring 3, the spool 4 and the plug 5 from falling out of the valve bore. When the valve is properly assembled, the force of the spring 3 acts on the retainer plate 6 through the spool 4 and the plug 5 so that the retainer plate 6 is positioned and held in the retainer groove 8. As shown in FIGS. 2A and 2B, the retainer plate 6 has a cut opening 6a (opening) that allows insertion of the retainer plate 6 from through the retainer hole 7 to an insertion completion position in the retainer groove 8 in a condition that the plug 5 is being pushed by the press jig 9 into a position inward of the retainer groove 8. The cut opening 6a is recessed into a U-letter shape, which corresponds in shape to an outer contour of the center pressing end 9a of the press jig 9, along a direction of insertion of the retainer plate 6 from the retainer hole 7. The retainer plate 6 also has curved, insertion guide surfaces 6b and 6b on both sides of the cut opening 6a so as to guide the insertion of the retainer plate 6 while holding the center pressing end 9a in the cut opening 6a.

The width of the retainer hole 7 and the width of the retainer groove 8 are herein set to the same width dimension that is larger than the thickness/width of the retainer plate 6 in view of the ease of insertion of the retainer plate 6 through the retainer hole 7 into the retainer groove 8. Further, the outside diameter of the plug 5 is set substantially equal to the inside diameter of the valve bore 2 in view of the sealing performance for prevention of the oil leakage from the opening of the valve bore 2.

The control valve unit of the automatic transmission is generally comprised of various hydraulic control valves including the above-structured hydraulic control valve. For example, valve bodies (upper and lower bodies) of the control valves are laminated together via separate plates so as to form a hydraulic circuit in which a network of hydraulic passages extends, like an ants' nest, throughout the inside of the control valve unit.

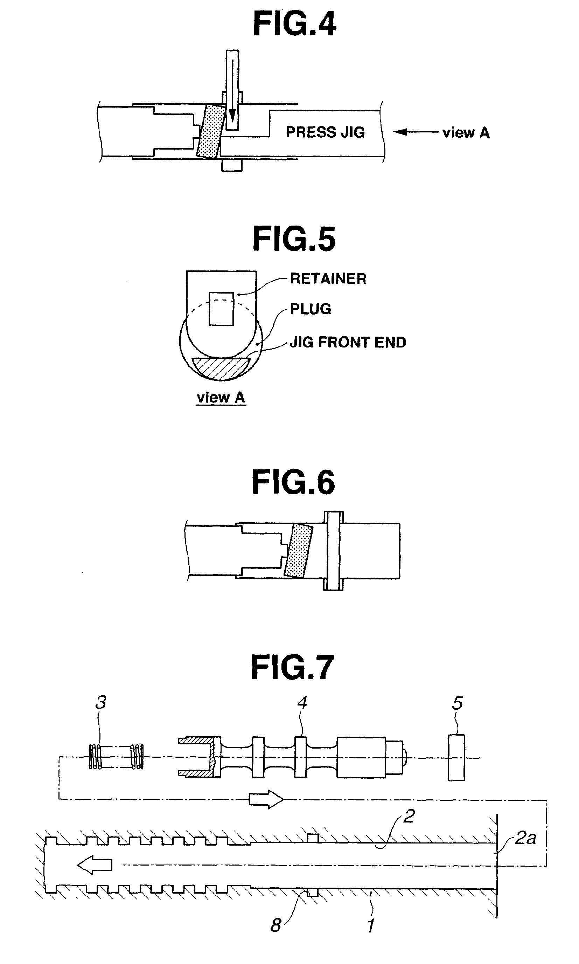

A conventional hydraulic control valve is assembled by the following operation. As shown in FIG. 3, a spring, a spool and a plug are inserted in order of mention into a valve bore of a valve body. The plug is pushed inward by a press jig (or a finger). While keeping the plug pushed inward, a retainer member is inserted into a retainer hole of the valve body as shown in FIG. 4. It is judged that the assembling of the spool is completed when an insertion-side surface of the retainer member is brought into contact with a semicircular front end of the press jig. Upon this judgment, the press jig is removed. The retainer member, which has been inserted to the midpoint in the retainer hole, is fitted into a retainer groove of the valve body. With this, the valve assembling operation is completed.

There is however a problem that, when the press jig (finger) is removed, the force of the spring acts on the retainer member in such a manner as to incline the retainer member and thereby cause deterioration in the operability of pushing the retainer member into the end of the retainer hole.

Further, the bottom side of the plug is kept pushed by the front end of the press jig during the assembling operation. There is thus a case where the plug gets inclined with the one side thereof being pushed by the press jig. Herein, the outside diameter of the plug is set substantially equal to the inside diameter of the valve bore in view of the sealing performance for prevention of the oil leakage from the opening of the valve bore. This makes it likely that the plug, even when slightly inclined during the assembling operation, comes into contact with the inner surface of the valve bore and easily gets stuck in such an inclined position relative to the inner surface of the valve bore as shown in FIG. 6. The occurrence of the above plug stuck state cannot be visually identified because the plug is located inward of the retainer member within the valve bore. There is no other choice but to judge the completion of the valve assembling operation at the time the retainer member is inserted and fitted in the retainer groove.

In the plug stuck state, the retainer member and the plug are in no contact with each other so that the force of the spring does not act on the retainer member. The retainer member is thus kept free and, when the orientation of the valve body is changed during the subsequent line process for e.g. assembling with the other valve body, fallen out of the retainer hole. After that, the plug is gradually released from the stuck state under the force of the spring. When the plug stuck state is completely resolved, the spool, the spring and the plug are fallen out of the valve bore due to the absence of the retainer member as the stopper member.

Accordingly, it has been demanded to prevent the occurrence of the plug stuck state without causing deterioration in the assembling operability of the hydraulic control valve.

In view of the above circumstances, the hydraulic control valve is assembled by the following valve part insertion step, plug pushing step, retainer insertion step and pushing force releasing step in the present embodiment.

### [Valve Part Insertion Step]

In the valve part insertion step, the spring 3, the spool 4 and the plug 5 are inserted into the valve bore 2 sequentially in this order from the opening end 2a of the valve bore 2. In the actual line assembling, the valve body 1 is held in a vertical position so as to orient the valve bore 2 vertically; and the spring 3, the spool 4 and the plug 5 are dropped sequentially into the valve bore 2 from the opening end 2a of the valve bore 2.

### [Plug Pushing Step]

In the plug pushing step, the press jig 9 is inserted from the opening end 2a of the valve bore 2 in such a manner that the center pressing end 9a of the press jig 9 uniformly presses the center area of the plug surface of the plug 5 as shown in FIG. 8 and thereby pushes the plug 5 to the position inward of the retainer groove 8 in which the retainer plate 6 is to be held. In the actual line assembling, the press jig 9 is inserted downwardly into the valve bore 2 from the opening end 2a so as to press the plug 5 against the spring force.

### [Retainer Insertion Step]

In the retainer insertion step, the retainer plate 6 is inserted from through the retainer hole 7 as shown in FIG. 9A in a condition that the plug 5 is being pushed by the press jig 9 to the position inward of the retainer groove 8. With this, the retainer plate 6 is brought into the insertion completion position within the retainer groove 8 as the U-shaped cut opening 6a of the retainer plate 6 is passed over the center pressing end 9a of the press jig 9 as shown in FIG. 9B. In other words, the insertion of the retainer plate 6 is completed while the plug 5 is kept uniformly pressed by the press jig 9. In the actual line assembling, the press jig 9 is inserted laterally in the retainer hole 7.

### [Pushing Force Releasing Step]

In the pushing force releasing step, the press jig 9 is removed from the opening end 2a of the valve bore 2 as shown in FIG. 10 after the completion of the insertion of the retainer plate 6. In the actual line assembling, the press jig 9 is pulled upwardly and thereby removed from the opening end 2a of the valve bore 2.

In the above valve assembly method, the insertion of the retainer plate 6 is completed while the plug 5 is kept uniformly pressed by the press jig 9. It is therefore possible to prevent the plug stuck state from occurring as a result of plug inclination by pressing the one side of the plug 5 by the press jig 9. In consequence, the retainer plate 6 can be properly held in position as the spring force acts on the retainer plate 6 through the plug 5. Even when the orientation of the valve body 1 is changed during the subsequent line process, the retainer plate 6 does not fall out of the retainer hole 7 and can assuredly prevent the spool 4, the spring 3 and the plug 5 from falling out of the valve bore.

As the plug 5 is kept uniformly pressed by the press jig 9 during the insertion of the retainer plate 6, the restoring force of the spring 3 does not act on the retainer plate 6 through the plug 5 in such a manner as to incline the retainer plate 6. It is thus possible to complete the insertion of the retainer plate 6 quickly and thereby improve the assembling operability of the retainer plate 6.

Further, the press jig 9 is formed with the uniform pressing end (center pressing end 9a). The use of such a press jig 9 makes it possible to, even when the setting position of the plug 5 is located inward far from the opening end 2a of the valve bore 2, not only press the plug surface of the plug 5 easily uniformly by the press jig 9 but also stably hold the plug 5 by surface pressing while allowing the insertion of the retainer plate 6 into the insertion completion position.

The retainer plate 6 is also formed with the U-shaped cut opening 6a corresponding in shape to the outer contour of the center pressing end 9a of the press jig 9. The use of such a retainer plate 6 makes it possible to prevent the occurrence of the plug stuck state, improve the assembling operability of the retainer plate 6 and hold the plug 5 stably by surface pressing while adopting a simple structure that the retainer plate 6 has only a single cut opening 6a.

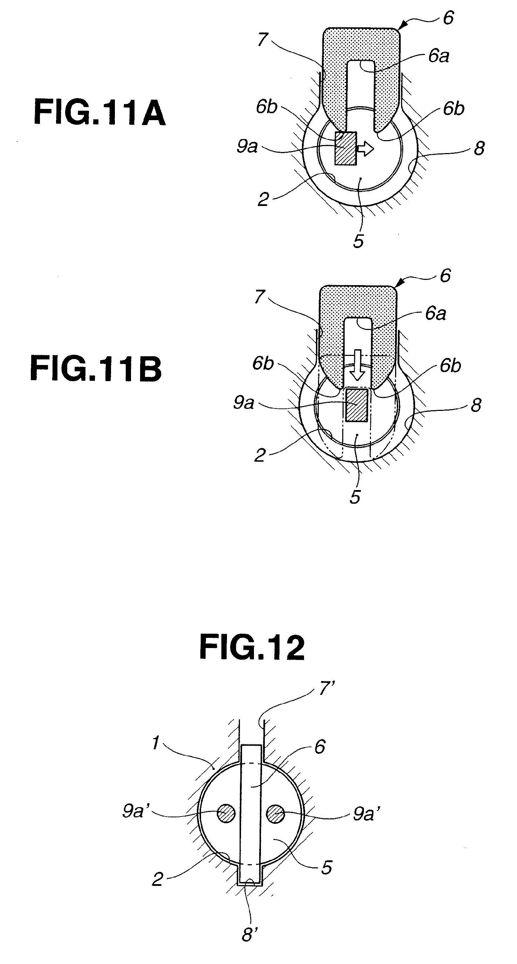

In the case where the center pressing end 9a is displaced from the center of the plug surface of the plug 5, the insertion of the retainer plate 6 may be blocked as shown in FIG. 11A when the retainer plate 6 is inserted from through the retainer hole 7 in the retainer insertion step. In such a case, the press jig 9 is moved so as to shift the plug contact position of the center pressing end 9a from the position shown in FIG. 11A to the position shown in FIG. 11 at which the U-shaped cut opening 6a is passed over the center pressing end 9a. As the insertion guide surfaces 6b and 6b are formed on the retainer plate 6 on both sides of the cut opening 6a, the insertion of the retainer plate 6 is guided by the insertion guide surfaces 6b and 6b with the cut opening 6a passed over the center pressing end 9a. This makes it possible to, even by a simple operation of moving the press jig 9, allow for the slight displacement of the center pressing end 9a from the center of the plug 5 and push the plug 5 by uniform pressing without the need to return to the plug pushing step and retry pushing the plug 5 by the press jig 9.

As described above, it is possible according to the present invention to improve the assembling operability of the retainer member 6 while preventing the occurrence of the plug stuck state in which the plug 5 gets stuck in the inclined position relative to the inner surface of the valve bore 2.

Although the present invention has been described above with reference to a specific embodiment, the present invention is not limited to the above embodiment. Various modifications and variations of the embodiment described above will occur to those skilled in the art without departing from the scope of the present invention.

For example, there may be used as the retainer member a retainer pin 6' as shown in FIG. 12 in place of the retainer plate 6. In this case, the press jig 9 are formed with divided pressing ends 9a' and 9a' to press areas of the plug surface of the plug 5 on both sides of the retainer pin 6' and thereby press the plug 5 uniformly. Further, the retainer hole 7' and the retainer groove 8' are each formed into a shape corresponding to the shape of the retainer pin 6'.

The plug 5, when located at a position near the opening end of the valve bore 2, can be pushed by a finger in place of the press jig 9. Even in this case, it is possible to insert the retainer plate 6 from the retainer hole 7 to the insertion completion position in the retainer groove 8 while keeping the plug 5 pressed uniformly to the position inward of the retainer groove 8 by forming a cut opening in the retainer plate 6 in such a manner that the cut opening can be passed and engaged over the finger.

Although the spring 3, the spool 4 and the plug 5 are arranged in this order in the valve bore 2 of the valve body 1 in the above embodiment, it is alternatively feasible to arrange the spool, the spring and the plug in order of mention.

Furthermore, it is alternatively feasible to provide a plurality of spools and/or a plurality of springs although a single spool and a single spring are provided in the above embodiment.

Even though the above embodiment of the present invention specifically refers to the shift valve of the automatic transmission, the present invention is also applicable to any hydraulic control valve other than the shift valve of the automatic transmission. Namely, the present invention can be applied, without particular limitation, to any hydraulic control valve of automatic transmission having a valve body formed with a valve bore in which a spool, a spring and a plug are arranged and retained on one end side thereof by a retainer member so as to prevent the spool, the spring and the plug from falling out of the valve bore while holding the spring in a compressed state.

## Claims

1. A hydraulic control valve of an automatic transmission, comprising:
a valve body;
a valve bore formed in the valve body;
a spool, a spring and a plug arranged in the valve bore;
a retainer member located in one end side of the valve bore so as to prevent the spool, the spring and the plug from falling out of the valve bore while holding the spring in a compressed state;
a retainer hole formed in the valve body for insertion of the retainer member therethough in a direction perpendicular to an axis of the valve; and
a retainer groove formed in the valve bore in communication with the retainer hole so as to hold therein the retainer member under a force of the spring,
the retainer member having an opening that allows insertion of the retainer member from the retainer hole to an insertion completion position in the retainer groove in a condition that the plug is pushed in the valve bore to a position inward of the retainer groove.

2. The hydraulic control valve of the automatic transmission according to claim 1, wherein the plug is inserted from an opening end of the valve bore and pushed in the valve bore by uniformly pressing a plug surface of the plug by a uniform pressing end of a press jig; and wherein the retainer member is a retainer plate having a cut opening formed into a shape corresponding to an outer contour shape of the uniform pressing end of the press jig along a direction of the insertion of the retainer plate from the retainer hole.

3. The hydraulic control valve of the automatic transmission according to claim 2, wherein the press jig has a center pressing end as said uniform pressing end to press a center area of the plug surface of the plug; and wherein the retainer plate has as said cut opening a U-shaped opening cut corresponding to an outer contour shape of the center pressing end of the press jig along the direction of the insertion of the retainer plate from the retainer hole.

4. The hydraulic control valve of the automatic transmission according to claim 3, wherein the retainer plate has curved, insertion guide surfaces on both sides of the cut opening to guide the insertion of the retainer plate while holding the center pressing end in the cut opening.

5. A hydraulic control valve assembly method for assembling a hydraulic control valve of an automatic transmission, the hydraulic control valve having: a valve body; a valve bore formed in the valve body; a spool, a spring and a plug arranged in the valve bore; a retainer member located in one end side of the valve bore so as to prevent the spool, the spring and the plug from falling out of the valve bore while holding the spring in a compressed state; a retainer hole formed in the valve body for insertion of the retainer member therethrough in a direction perpendicular to an axis of the valve; and a retainer groove formed in the valve bore in communication with the retainer hole so as to hold therein the retainer member under a force of the spring, the hydraulic control valve assembly method comprising:
a valve part insertion step of inserting the spring, the spool and the plug into the valve bore from an opening end of the valve bore;
a plug pushing step of pushing the plug by uniform pressing to a position inward of the retainer groove;
a retainer insertion step of inserting the retainer member from through the retainer hole to an insertion completion position in the retainer groove while pushing the plug by uniform pressing to the position inward of the retainer groove; and
a pushing force releasing step of, after completion of the retainer insertion step, releasing the plug from being pushed.

6. The hydraulic control valve assembly method according to claim 5, wherein the plug pushing step is performed by providing a press jig with a uniform pressing end, inserting the press jig from the opening end of the valve bore, pressing a plug surface of the plug uniformly by the uniform pressing end and thereby pushing the plug to the position inward of the retainer groove; wherein the retainer insertion step is performed by, while keeping the plug pushed inward, inserting the retainer member from the retainer hole to the insertion completion position in the retainer groove by passing the retainer member over the uniform pressing end of the press jig; and wherein the pushing force releasing step is performed by, after the completion of the retainer insertion step, removing the press jig out from the opening end of the valve bore.

7. The hydraulic control valve assembly method according to claim 6, wherein the press jig has a center pressing end as said uniform pressing end to press a center area of the plug surface of the plug; wherein the retainer plate has as said cut opening a U-shaped opening cut corresponding to an outer contour shape of the center pressing end of the press jig along the direction of the insertion of the retainer plate from the retainer hole; and wherein the retainer insertion step is performed by, while keeping the plug pushed inward, inserting the retainer member from the retainer hole to the insertion completion position in the retainer groove by passing the U-shaped cut opening over the center pressing end.

8. The hydraulic control valve assembly method according to claim 7, wherein the retainer plate has curved, insertion guide surfaces on both sides of the cut opening to guide the insertion of the retainer plate while holding the center pressing end in the cut opening; and wherein the retainer insertion step includes, when the retainer member inserted from the retainer hole is blocked by the center pressing end, moving the press jig so as to shift a plug contact position of the center pressing end to a position at which the U-shaped cut opening is passed over the center pressing end.
